# EUROPÄISCHE PATENTSCHRIFT

(11) **EP 0 878 650 B1**
(45) Veröffentlichungstag und Bekanntmachung des Hinweises auf die Patenterteilung: **23.07.2003**
(21) Anmeldenummer: 98108136.7
(22) Anmeldetag: 05.05.1998
(51) Int. Cl.: F16K 15/04

(54) **Rückschlagventil**
Check valve
Soupape de retenue

(30) Priorität: 15.05.1997 DE 29708655 U
(43) Veröffentlichungstag der Anmeldung: 18.11.1998
(73) Patentinhaber: Xomox International GmbH & Co., 88131 Lindau (DE)
(72) Erfinder: Gonsior, Wolfgang, 88131 Bodolz (DE)
(74) Vertreter: Schmitt, Meinrad, Dipl.-Ing.

(56) Entgegenhaltungen:
- DE-A- 1 750 330
- DE-B- 1 057 840
- DE-U- 7 213 157
- FR-A- 2 141 503
- FR-A- 2 351 333
- US-A- 4 687 023
- PATENT ABSTRACTS OF JAPAN vol. 6, no. 61 (M-123) [939] , 20.April 1982 & JP 57 001871 A (TOKYO SHIBAURA DENKI), 7.Januar 1982,
- PATENT ABSTRACTS OF JAPAN vol. 005, no. 006 (M-050), 16.Januar 1981 & JP 55 139566 A (TOSHIBA CORP;OTHERS: 02), 31.Oktober 1980,

## Beschreibung

Die Erfindung bezieht sich auf ein Rückschlagventil gemäß der im Oberbegriff des Patentanspruchs 1 angegebenen Merkmale.

Aus der JP 57 001 871A ist ein derartiges Rückschlagventil mit einem Gehäuse aus zwei Gehäuseteilen bekannt, in welchem ein Führungskörper für eine vom Strömungsmedium mitnehmbare Kugel angeordnet ist. Der Führungskörper enthält einen ringförmigen Anschlagkörper sowie stegförmige Führungselemente, auf deren schräg verlaufenden Oberkanten die Kugel infolge der Schwerkraft an einen Sitz des zweiten Gehäuseteils rollen kann. Der Führungskörper ist ein separates Bauteil, welches an einer axialen Stirnfläche des ersten Gehäuseteils anliegt und mit einem kurzen Ringbund in den ersten Gehäuseteil eingreift. Im übrigen befindet sich der Führungskörper sowie die für das Abrollen der Kugel vorgesehenen Stegteile ebenso wie der vordere Endbereich des ersten Gehäuseteils innerhalb einer muffenartigen Erweiterung des zweiten Gehäuseteils. Das durch den abgewinkelten Teil des zweiten Gehäuseteils einströmende Medium nimmt die Kugel mit, wobei die zentrale Öffnung des ringförmigen Anschlagkörpers im wesentlichen verschlossen wird und das Strömungsmedium radial außen durch die zwischen den Stegen befindlichen Freiräume strömt. In den genannten Freiräumen können sich vom Strömungsmedium mitgeführte Fremdkörper festsetzen, wodurch der Strömungswiderstand in unerwünschter Weise erhöht wird. Eine Vergrößerung der Zwischenräume hätte eine Reduzierung der Festigkeit des Führungskörpers zur Folge, oder die Außenabmessungen des Rückschlagventils müssten vergrößert werden. Eine Integration des Führungskörpers in einen der Gehäuseteile oder gar eine Ausleitung des Gehäuses ist weder vorbekannt noch dem Fachmann hieraus nahe gelegt. Zudem sind besondere Maßnahmen zur Festlegung des Führungskörpers im Gehäuse erforderlich.

Ferner ist aus der DE 72 13 157 U ein Rückschlagventil bekannt, dessen Ventilsitz und Stege bzw. Längsführungsrippen gemeinsam im gleichen Gehäuseteil angeordnet sind. Sämtliche Stege weisen zur Längsachse parallele freie Kanten aus, auf welchen die Ventilkugel abrollen kann. Die Kugel gelangt somit nicht infolge der Schwerkraft am Ventilsitz zur Anlage, so dass zum Schließen des Rückschlagventils ein relativ hoher Differenzdruck erforderlich ist. Die axialen Endflächen der Stege liegen frei und beabstandet zur Innenfläche des gegenüber liegenden Gehäuseteils bzw. Anschlussstücks. In den somit gebildeten Toträumen können sich Teile des Strömungsmediums oder Fremdkörper festsetzen, und des weiteren können sich infolge von Verwirbelungen Druckverluste ergeben.

Des weiteren ist aus der US 4 687 023 A ein Rückschlagventil bekannt, welches in einem ersten Gehäuseteil Führungselemente für eine im Strömungskanal bewegbare Kugel aufweist. Die beiden seitlichen Führungselemente sind im wesentlichen parallel zueinander angeordnet, ragen in ein zweites Gehäuseteil hinein und liegen an den im wesentlichen parallelen inneren Seitenflächen des zweiten Gehäuseteils an. Die genannten Führungselemente weisen für die Kugel als Kurven ausgebildete Führungsflächen auf, welche nach innen und bei horizontaler Einbaulage des Rückschlagventils nach unten geneigt ausgebildet sind. Oberhalb des Strömungskanals enthält das Rückschlagventil einen Ausweichraum, in welchen die Kugel durch das strömende Medium bewegt wird und welcher vergleichsweise große Außenabmessungen des Gehäuses bedingt. Die Führungselemente bestehen aus dem gleichen Werkstoff, nämlich Metall, wie das erste Gehäuseteil und müssen vergleichsweise groß und steif ausgebildet werden, um bei der Fertigung und Montage Beschädigungen oder gar ein Abbrechen zu vermeiden. Dieses Rückschlagventil kann nicht ohne weiteres innen mit einer Auskleidung aus Kunststoff versehen werden, zumal eine Auskleidung der im wesentlichen frei in das zweite Gehäuseteil hineinragenden Führungselemente eine nicht unerhebliche Vergrößerung der Außenabmessungen des Rückschlagventils erfordern würde.

Schließlich ist aus der DE 1 057 840 B ein Rückschlagventil bekannt, welches für zwei bogenförmige Drähte als Führungsbahnen für die Kugel aufweist. Entlang dieser bogenförmigen Drähte wird die Kugel durch das strömende Medium in einen Ausweichraum bewegt. Der Ausweichraum bedingt relativ große Außenabmesseungen des Rückschlagventils. Das Rückschlagventil kann innen nicht ohne weiteres mit einer Auskleidung aus Kunststoff versehen werden, zumal die Festlegung und Ummantelung der bogenförmigen Drähte mit einer Auskleidung einen erheblichen Aufwand erfordern würde.

Hiervon ausgehend liegt der Erfindung die Aufgabe zugrunde, ein Rückschlagventil der genannten Art dahingehend auszubilden, dass bei einfacher Konstruktion und auch geringen Differenzdrücken und / oder Rückflussmengen des Strömungsmediums eine sichere Absperrung gewährleistet wird und ein geringer Fertigungs- und Montageaufwand erforderlich ist.

Die Lösung dieser Aufgabe erfolgt bei einem Rückschlagventil der genannten Art gemäß der im Patentanspruch 1 angegebenen Merkmale.

Das vorgeschlagene Rückschlagventil zeichnet sich durch einen funktionsgerechten Aufbau aus und enthält wenigstens einen zum Sitz schräg verlaufenden Steg, auf welchem die Kugel infolge der Einwirkung der Schwerkraft auf bzw. in den Sitz rollt. Der Steg besteht aus Kunststoff und ist in zweckmäßiger Weise Bestandteil einer Kunststoffauskleidung, insbesondere aus FEP, PFA oder PVDF. Das vorgeschlagene Kugelrückschlagventil kann somit ohne spezielle Anforderungen an den Verlauf der Rohrleitung zum Einsatz gelangen und gewährleistet auch bei kleinsten Differenzdrücken eine funktionssichere Absperrung. Das vorgeschlagene Rückschlagventil kann in beliebiger Lage verwendet werden, also in horizontal verlaufenden Rohrleitungen ebenso wie in vertikal oder schräg verlaufenden Rohrleitungen.

Das Rückschlagventil enthält in zweckmäßiger Weise zwei Gehäuseteile, wobei der erste Gehäuseteil wenigstens den schrägen Steg und der zweite Gehäuseteil den Ventilsitz enthält. Der Steg und ebenso der Ventilsitz bestehen aus Kunststoff und sind insbesondere Bestandteil einer Kunststoff-Auskleidung der beiden Gehäuseteile, welche aus Metall bestehen. Der Steg ist vollständig innerhalb des ersten Gehäuseteiles angeordnet und die freie axiale Endfläche des Steges befindet sich innerhalb des ersten Gehäuseteiles und liegt zweckmäßig an einer gegenüberliegenden Fläche des Kunststoffes bzw. der Kunststoffauskleidung des zweiten Gehäuseteiles an. Der Steg erstreckt sich im wesentlichen in radialer Richtung und liegt bevorzugt in einer Axialebene, welche durch die Längsachse des Gehäuses verläuft. Die Herstellung der Auskleidung einerseits mit dem Ventilsitz und andererseits mit dem Steg kann mit einem vergleichsweise geringen Aufwand erfolgen. Das Rückschlagventil ist in beliebiger Lage einsetzbar und kann in waagrecht, senkrecht oder schräg verlaufenden Rohrleitungen gleichermaßen verwendet werden. Durch die Ausbildung des Führungselements als Kunststoffsteg und ebenso die Ausbildung des Sitzes aus Kunststoff wird eine leicht gängige Bewegbarkeit der Kugel sichergestellt und bereits bei geringen Differenzdrücken eine dichte Anlage der Kugel am Sitz gewährleistet.

Weiterbildungen und besondere Ausgestaltungen der Erfindung sind in den Unteransprüchen sowie der weiteren Beschreibung angegeben.

Die Erfindung wird nachfolgend anhand der in der Zeichnung dargestellten Ausführungsbeispiele näher erläutert, ohne daß insoweit eine Einschränkung erfolgt. Es zeigt:
- Fig. 1: Das Rückschlagventil mit Gehäuseteilen aus Metall und einer Kunststoff-Auskleidung,
- Fig. 2: eine Ausführungsform mit einem Kunststoffgehäuse.

Das Rückschlagventil enthält ein Gehäuse mit zwei Gehäuseteilen 2, 4 vorzugsweise aus Metall. Das Ventil ist in der horizontalen Einbaulage mit horizontaler Längsachse 6 dargestellt. Zum Anschluß und Herstellung einer Verbindung mit einer Rohrleitung enthalten die beiden Gehäuseteile 2, 4 an ihren freien Enden jeweils einen Flansch 8, 10 mit einer Anzahl in bekannter Weise über den Umfang verteilter Bohrungen 12, 14.

Das Rückschlagventil bzw. dessen beiden metallischen Gehäuseteile 2, 4 sind innen mit einer Auskleidung 16, 18 aus Kunststoff versehen. Die beiden Gehäuseteile 2, 4 sind mittels Schrauben 20 miteinander verbunden, wobei bezogen auf die Längsachse 6 über den Umfang verteilt eine geeignete Anzahl derartiger Schraubverbindungen vorgesehen sind.

Innerhalb des Gehäuses ist die Kugel 22 angeordnet, welche bevorzugt aus Kunststoff wie PTFE besteht. Wie dargestellt, liegt die Kugel 22 am Sitz 24 an, welcher Bestandteil der Auskleidung 18 ist. Die mit strichpunktierter Linie 26 angedeutete Ebene, in welcher die Kugel 22 am Sitz 24 aus Kunststoff anliegt, verläuft orthogonal zur Längsachse 6, welche in der hier dargestellten Einbauposition im wesentlichen horizontal ausgerichtet ist.

Die Auskleidung 16 des ersten Gehäuseteils 2 enthält als Kugelführung einen unteren Steg 28, dessen Oberkante 30 schräg in Richtung zum Sitz 24 nach unten verläuft. Der aus Kunststoff bestehende Steg 28 besitzt eine axiale Endfläche 31, welche innerhalb des ersten Gehäuseteils 2 liegt. Die Oberkante 30 ist bezüglich der Sitzebene 26 in einem spitzen Winkel 32 angeordnet. Somit läuft die Kugel auch bei kleinen Differenzdrücken oder kleinen Rückflußmengen sicher in die hier dargestellte Lage infolge der Schwerkraft. Die axiale Endfläche 31 des Steges 28 liegt in einem vorgegebenen Abstand 33 vor der Stirnfläche 34 des ersten Gehäuseteiles 2, wobei diese Stirnfläche 34 dem zweiten Gehäuseteil 4 zugewandt ist. Der Steg 28 weist in Umfangsrichtung nur eine geringe Breite, bevorzugt in der Größenordnung von wenigen Millimetern auf, so daß der Strömungsquerschnitt nur geringfügig reduziert wird.

Das Gehäuse und insbesondere der erste Gehäuseteil 2 mit dem Kunststoff-Steg 28 weist außen eine Markierung 35 auf, welche die Durchflußrichtung angibt. Beim horizontalen Einbau des Rückschlagventils in eine Rohrleitung ist darauf zu achten, daß die Markierung oben angeordnet ist und somit der untere Steg 28 sich in der Einbaulage wie dargestellt tatsächlich am untersten Punkt befindet, damit die Kugel in den Sitz 24 rollen kann. Die Auskleidung 16 des ersten Gehäuseteils 2 enthält ferner weitere Stege 36, deren radial nach innen gerichteten freien Kanten 38 im wesentlichen parallel zur Längsachse 6 verlaufen. Wie mit gestrichelter Linie 40 angedeutet, wird die Kugel durch das das Rückschlagventil durchströmende Medium in Richtung der Markierung bzw. des Pfeiles 35 gemäß Zeichnung nach rechts mitgenommen und liegt an balligen Kanten oder Anlageflächen 42 der weiteren Stege 36 an, wobei das Medium durch die freien Räume zwischen den einzelnen Stegen, welche in Umfangsrichtung nur eine geringe Breite aufweisen, hindurchströmen kann. Durch die erfindungsgemäße Anordnung des wenigstens einen Kunststoff-Steges 28, zweckmäßig in Kombination mit dem diametral zu diesem angeordneten weiteren, gemäß Zeichnung oberen Steg 36 wird ein besonderer Ausweichraum für die Kugel 22 nicht benötigt. Vielmehr wird erfindungsgemäß die Kugel von dem in Durchflußrichtung strömenden Medium umspült. Weder in einem Ausweichraum noch in sonstigen Toträumen können sich Restmengen, Fremdkörper oder feste Partikel des Strömungsmediums festsetzen. Da ein besonderer Ausweichraum für die Kugel nicht vorhanden ist, sind die Außenabmessungen des Rückschlagventils auf ein Minimum reduziert.

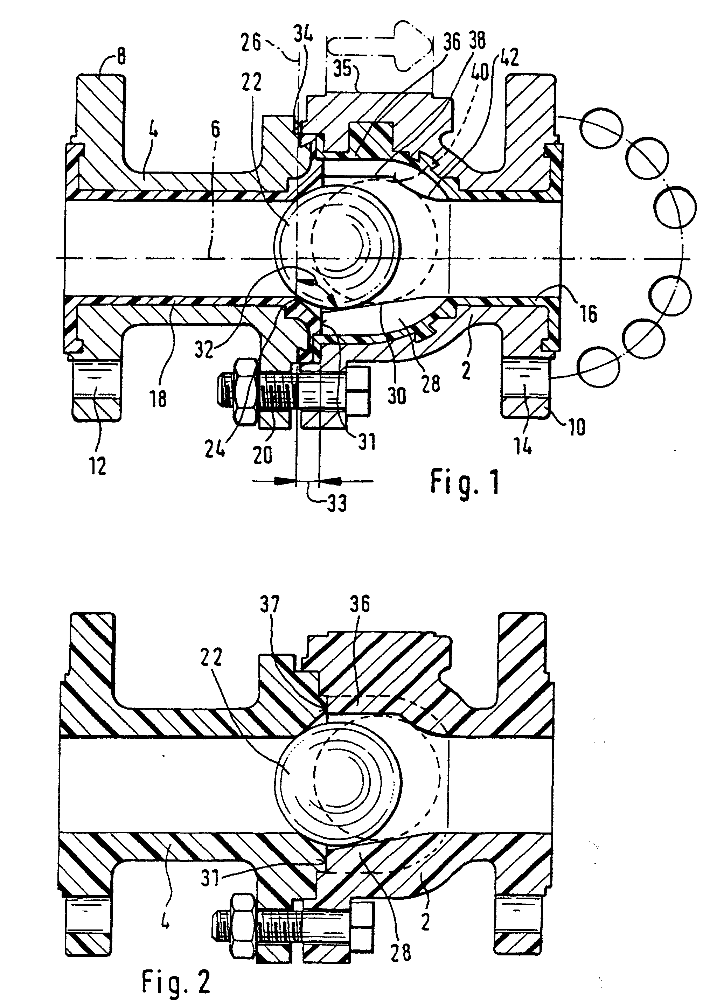

Fig. 2 zeigte eine alternative Ausgestaltung des Rückschlagventils, gemäß welcher das Gehäuse insgesamt aus Kunststoff besteht. Die Stege 28 und 36 sind integrale Bestandteile des Kunststoff-Gehäuseteils 2, und der Sitz 24 ist entsprechend integraler Bestandteil des Kunststoff-Gehäuseteils 4. Da die axialen Endflächen 31 und 37 innerhalb des ersten Gehäuseteils 2 liegen, können die Stege gleichwohl vergleichsweise schmal ausgebildet sein, so daß sie den Strömungsquerschnitt nur wenig verengen und folglich die Außenabmessungen des Rückschlagventils klein ausgebildet sind.

### Bezugszeichen

- 2, 4: Gehäuseteil
- 6: Längsachse
- 8, 10: Flansch
- 12, 14: Bohrung
- 16, 18: Kunststoffauskleidung
- 20: Schraube
- 22: Kugel
- 24: Sitz
- 26: strichpunktierte Linie / Sitzebene
- 28: unterer Steg
- 30: Oberkante von 28
- 31: axiale Endfläche von 28
- 32: Winkel
- 33: Abstand
- 34: axiale Stirnfläche von 2
- 35: Markierung
- 36: weiterer Steg
- 38: freie Kante
- 40: gestrichelte Linie
- 42: ballige Kante

## Patentansprüche

1. Rückschlagventil mit einem Gehäuse, welches zwei miteinander verbundene Gehäuseteile (2, 4) aufweist, und einer darin auf einem Führungselement (28) bewegbar angeordneten Kugel (22), welche von einem Strömungsmedium mitnehmbar ist und infolge der Schwerkraft an einen Sitz (24) zur Anlage gelangen kann, wobei das Führungselement als ein zum Sitz (24) schräg verlaufender Steg (28) ausgebildet ist, auf dessen Oberkante (30) die Kugel (22) an oder in den Sitz (24) rollen kann, und wobei der zweite Gehäuseteils (4) den Sitz (24) aufweist,
**dadurch gekennzeichnet, dass** der vollständig innerhalb des ersten Gehäuseteils (2) angeordnete Steg (28) in eine Kunststoffauskleidung (16) im Inneren des ersten Gehäuseteils (2) oder in den aus Kunststoff bestehenden ersten Gehäuseteil (2) integriert ist, dass der Sitz (24) Bestandteil einer Kunststoffauskleidung im Inneren des zweiten Gehäuseteils (4) oder des aus Kunststoff bestehenden zweiten Gehäuseteils (4) ist,
und dass der Steg (28) mit einer axialen Endfläche (31) an der Kunststoffauskleidung des zweiten Gehäuseteils (4) oder an dessen Kunststoff anliegt.

2. Rückschlagventil nach Anspruch 1, **dadurch gekennzeichnet, dass** die im wesentlichen gerade und / oder ebene Oberkante (30) des Steges (28) in einem spitzen Winkel (32) zur Sitzebene (26) verläuft, welche im wesentlichen orthogonal zu einer Längsachse (6) des Gehäuses verläuft.

3. Rückschlagventil nach einem der Ansprüche 1 bis 2, **dadurch gekennzeichnet, dass** zusätzlich zum Steg (28) im ersten Gehäuseteil (2) wenigstens ein weiterer Steg (36) mit einer freien Kante (38) vorgesehen ist, an welcher die Kugel (22) infolge des Strömungsmediums zur Anlage gelangt.

4. Rückschlagventil nach Anspruch 3, **dadurch gekennzeichnet, dass** die radial nach innen gerichtete freie Kante (38) des weiteren Stegs (36) im wesentlichen parallel zur Längsachse (6) verläuft, und / oder dass der weitere Steg (36) eine ballige Kante (42) als Anlagefläche für die Kugel (22) aufweist.

5. Rückschlagventil nach einem der Ansprüche 1 bis 4, **dadurch gekennzeichnet, dass** der Führungssteg (28) und / oder der bevorzugt diametral angeordnete weitere Steg (36) im wesentlichen in einer Axialebene angeordnet sind.

6. Rückschlagventil nach einem der Ansprüche 1 bis 5, **dadurch gekennzeichnet, dass** die axiale Endfläche (31, 37) des Stegs (28, 36) in einem vorgegebenen Abstand (33) vor der axialen Stirnfläche (34) des ersten Gehäuseteils (2) und innerhalb desselben angeordnet ist.

7. Rückschlagventil nach einem der Ansprüche 1 bis 6, **dadurch gekennzeichnet, dass** das Gehäuse, insbesondere der den unteren, schrägen Steg (28) aufweisende erste Gehäuseteil (2), für die erforderliche Einbauposition eine Markierung (35) aufweist, welche bevorzugt diametral zum unteren Steg (28) auf der Gehäuseaußenseite angeordnet ist und / oder als ein der Strömrichtung entsprechender Pfeil ausgebildet ist.

## Claims

1. A nonreturn valve having a housing which has two mutually connected housing parts (2, 4), and a ball (22) which is arranged movably therein on a guide element (28), may be entrained by a flow medium and can come into abutment against a seat (24) as a result of gravity, with the guide element constructed as a web (28) which runs obliquely with respect to the seat (24) and on the upper edge (30) whereof the ball (22) rolls against or into the seat (24), and with the second housing part (4) having the seat (24),
**characterised in that** the web (28) is arranged completely within the first housing part (2) and is integrated into a plastics lining (16) in the interior of the first housing part (2) or into the first housing part (2) which is made from plastics material, **in that** the seat (24) is part of a plastics lining in the interior of the second housing part (4) or the second housing part (4) which is made from plastics material, and **in that** the web (28) abuts by means of an axial end face (31) against the plastics lining of the second housing part (4) or against the plastics material thereof.

2. A nonreturn valve according to Claim 1, **characterised in that** the substantially linear and/or planar upper edge (30) of the web (28) runs at an acute angle (32) with respect to the plane (26) of the seat, which runs substantially at a right angle to a longitudinal axis (6) of the housing.

3. A nonreturn valve according to one of Claims 1 to 2, **characterised in that** in addition to the web (28) there is provided in the first housing part (2) at least one further web (36) having a free edge (38) against which the ball (22) comes into abutment as a result of the flow medium.

4. A nonreturn valve according to Claim 3, **characterised in that** the radially inwardly pointing free edge (38) of the further web (36) runs substantially parallel to the longitudinal axis (6), and/or **in that** the further web (36) has a curved edge (42) as an abutment face for the ball (22).

5. A nonreturn valve according to one of Claims 1 to 4, **characterised in that** the guide web (28) and/or the preferably diametrically arranged further web (36) are arranged substantially in an axial plane.

6. A nonreturn valve according to one of Claims 1 to 5, **characterised in that** the axial end face (31, 37) of the web (28, 36) is arranged at a predetermined spacing (33) in front of the axial end face (34) of the first housing part (2) and within the latter.

7. A nonreturn valve according to one of Claims 1 to 6, **characterised in that** the housing, and in particular the first housing part (2) having the lower oblique web (28), has a mark (35) of the required installation position, this mark (35) preferably being arranged diametrically with respect to the lower web (28) on the outside of the housing and/or being constructed as an arrow corresponding to the direction of flow.

## Revendications

1. Clapet antiretour avec un boîtier, qui présente deux parties (2, 4) de boîtier pouvant être reliées l'une à l'autre, et une bille (22) placée mobile dedans sur un élément de guidage (28), qui est entraînée par un fluide en écoulement et peut venir en appui sur un siège (24) sous l'effet de la gravité, l'élément de guidage étant conformé en barre (28) s'étendant à l'oblique par rapport au siège (24), barre sur le bord supérieur (30) de laquelle la bille (22) peut rouler sur ou dans le siège (24), et la deuxième partie de boîtier (4) présentant le siège (24),
***caractérisé en ce que*** la barre (28) placée entièrement dans la première partie de boîtier (2) est intégrée dans un habillage en matière plastique (16) à l'intérieur de la première partie (2) de boîtier ou dans la première partie (2) de boîtier constituée en matière plastique,
***en ce que*** le siège (24) fait partie d'un habillage en matière plastique à l'intérieur de la deuxième partie (4) de boîtier ou de la deuxième partie (4) de boîtier constituée en matière plastique, et
***en ce que*** la barre (28) s'appuie avec une surface d'extrémité axiale (31) sur l'habillage en matière plastique de la deuxième partie de boîtier (4) ou sur sa matière plastique.

2. Clapet antiretour selon la revendication 1, ***caractérisé en ce que*** le bord supérieur (30) sensiblement droit et/ou plan de la barre (28) forme un angle aigu (32) avec le plan (26) du siège, lequel s'étend pour l'essentiel orthogonalement à un axe longitudinal (6) du boîtier.

3. Clapet antiretour selon l'une quelconque des revendications 1 à 2, ***caractérisé en ce qu***'en plus de la barre (28), il est prévu dans la première partie (2) de boîtier au moins une autre barre (36) avec un bord libre (38) sur lequel la bille (22) vient en appui sous l'effet du fluide d'écoulement.

4. Clapet antiretour selon la revendication 3, ***caractérisé en ce que*** le bord libre (38) de l'autre barre (36) tourné radialement vers l'intérieur s'étend pour l'essentiel parallèlement à l'axe longitudinal (6), et/ou ***en ce que*** l'autre barre (36) présente un bord bombé (42) servant de surface d'appui pour la bille (22).

5. Clapet antiretour selon l'une quelconque des revendications 1 à 4, ***caractérisé en ce que*** la barre de guidage (28) et/ou l'autre barre (36) placée de préférence diamétralement sont placées pour l'essentiel dans un plan axial.

6. Clapet antiretour selon l'une quelconque des revendications 1 à 5, ***caractérisé en ce que*** la surface d'extrémité axiale (31, 37) de la barre (28, 36) est placée à une distance (33) prédéterminée de la surface frontale axiale (34) de la première partie de boîtier (2) et à l'intérieur de celle-ci.

7. Clapet antiretour selon l'une quelconque des revendications 1 à 6, ***caractérisé en ce que*** le boîtier, en particulier la première partie (2) de boîtier présentant la barre inférieure oblique (28), présente pour la position de montage nécessaire un marquage (35), qui est placé de préférence diamétralement par rapport à la barre inférieure (28) sur la face extérieure du boîtier et/ou est conformé en flèche correspondant à la direction d'écoulement.
